# EUROPEAN PATENT SPECIFICATION

(11) **EP 0 537 392 B1**
(45) Date of publication and mention of the grant of the patent: **02.01.1997**
(21) Application number: 91309562.6
(22) Date of filing: 17.10.1991
(51) Int. Cl.: H02K 23/18

(54) **Movable brush type AC/DC servo hunting stepper motor**
Servo-Verstärkungsschrittmotor der Wechselstrom/Gleichstrom-Bauart mit verstellbaren Bürsten
Servo-moteur pas à pas de renforcement à courant alternatif/courant continu du type à balais déplaçables

(43) Date of publication of application: 21.04.1993
(73) Proprietor: Yang, Tai-Her, Taipei (TW)
(72) Inventor: Yang, Tai-Her, Taipei (TW)
(74) Representative: Arthur, Bryan Edward

(56) References cited:
- EP-A- 0 274 361
- DE-C- 681 826
- US-A- 1 974 934
- US-A- 3 440 464

## Description

### Background of the Invention

The present invention relates to an adjustable brush electric motor arrangement using an auxiliary motor, advantageously an AC/DC servo hunting motor, to adjust the position of the brushes, the hunting or auxiliary motor comprising a rotor, a stator and movable carbon brushes. The auxiliary motor may be controlled by a central control unit. The main functions of the structure are as follows:
(A) Where the magnetic field and armature are connected in series, AC or DC power supply is supplied to the rotor.
(B) Where the magnetic field is connected in parallel to the armature, DC power is supplied to the motor.

The main advantageous characteristics include the coupling of armature direction switch and carbon body and a rotation driving and fixing structure on the adjustable brush assembly combined with the rotor of the auxiliary motor which can lock the stator on the motor housing or to drive the auxiliary motor. It also conducts electric current from a conductive ring on the adjustable brush assembly and also, by means of the removal of the adjustable brush assembly, gives the armature windings and the magnetic field the following characteristics:
1. The carbon body coupling functions as an auxiliary motor for forward direction angular displacement of the adjustable brush assembly in selecting any applicable series motor, shunt motor, compound motor or generator to eliminate sparking discharge produced by the armature reaction and to improve efficiency and expand the functions of the motor.
2. The adjustable brush assembly is composed of a rotor and a stator in the auxiliary motor driven by a controllable electric current power source of AC or DC in a series connected or DC shunt hunting stepper motor.
3. The dual type of adjustable brush assembly can be driven forward or reverse directions and also features an auxiliary motor with a rotor and a stator and the functions mentioned in items 1 and 2 above.

US Patent No. 1974934 discloses a motor of the commutator type having means for automatically adjusting the position of the motor supply brushes so as to maintain the motor speed constant or at any desired fixed value. The brushes are carried on a rotatable frame which carries a suitable field structure having the usual field winding. An armature is fastened to a shaft 4 so as to rotate in unison therewith. The armature also includes a suitable commutator and cooperating brushes. In a normal generator, the field structure is fixed, and there is no perceptible movement. In this generator, the field structure for the brush control generator is rotatably mounted on the shaft, and consequently as the armature rotates it tends to carry with it the associated field structure and consequently the brushes 8 and 9. The position of the brushes is determined by the balance between a magnetotractive effect of the generator and the tension on a spring.

DE-C-681826 discloses a stepping motor which is coupled via an epicyclic gear arrangement to a rotary member which carries brushes which engage the commutator of a main electric motor.

### SUMMARY OF THE INVENTION

According to the present invention, an adjustable brush electric motor arrangement comprises a first rotary electric motor including a drive-shaft wound with a primary armature winding, a commutator mounted on said drive-shaft and electrically connected to said primary armature winding, a stator wound with a primary field winding and an electrically-adjustable brush assembly arranged to maintain conductive contact with said commutator during rotation thereof, said electrically-adjustable brush assembly being freely rotatable on said drive shaft by a second rotary electric motor supported on said drive-shaft.

Advantageous embodiments of the invention are described in the dependent claims.

### BRIEF DESCRIPTION OF THE DRAWINGS

Fig. 1 is descriptive drawing of the electric structure of an adjustable carbon brush assembly in angular displacement driven auxiliary motor;

Fig. 2 is the descriptive drawing on the structure of an adjustable carbon brush assembly floating type auxiliary motor for hunting stepper motor.

Fig. 3 is descriptive drawing for showing the balanced state of the stator which tracts, with hunting stepper function, the carbon brush assembly, armature and magnet field.

Fig. 4 is the carbon brush assembly retrieves to balanced state, as described in Figure 2, by armature driven rotor and then by the stator under hunting stepper function.

Fig. 5 is a descriptive drawing of a multi-function electric structure in an adjustable carbon brush assembly with function of angular displacement drive and floating angular displacement unit.

### DETAILED DESCRIPTION OF THE INVENTION

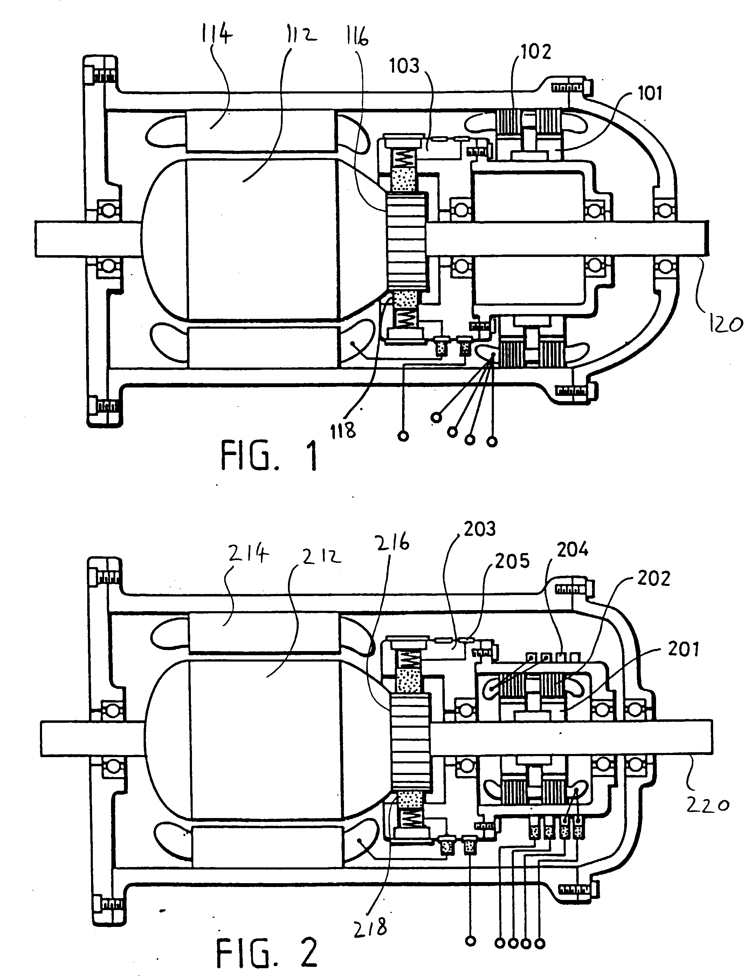

An adjustable brush electric motor is shown in Figure 1. The adjustable brush electric motor includes a first rotary electric motor including a drive shaft 120 wound with a primary armature winding 112, a commutator 116 mounted on the drive shaft 120 and electrically connected to the primary armature winding 112. The first rotary electric motor also includes a primary stator wound with a primary field winding 114. An electrically adjustable brush assembly 103,118 is arranged to make contact with the commutator 116 during rotation of the drive shaft 120. The brush assembly 103,118 is freely rotatable on the drive shaft 120 by a second rotary electric motor supported on the drive shaft 120. The secondary rotary electric motor includes a rotor 101 and a stator 102 mounted on a body to which the adjustable brushes 118 are attached. The motor is controlled by a central control unit which operates in the following way:
(A) Where the armature and field windings 101,102 are connected in series, the central control unit adjusts the electric current from an AC or DC power source.
(B) Where the field windings and armature 101,102 are connected in parallel, the central control unit CCU controls DC electric current.

The main characteristics are the coupling of armature direction switch and carbon brush and adjustable carbon brush assembly which is connected tc the rotor of auxiliary motor with rotation driving and fixing structure by receiving the stator locked to the motor housing or manual driving. It also connects the electric current from the conductive ring on the carbon brush assembly into the armature. By means of the carbon brush assembly, it makes the armature windings and the magnetic field carry out the following functions:
It can be applied as a DC series motor or DC shunt motor or AC compulsion motor for changing angular displacement, so that the carbon brush assembly is adjusted to minimise discharge produced by the armature reaction and to improve its efficiency. Furthermore, it can change the direction of driving of the motor by means of moving the electric carbon body through an angle or locking the armature and magnetic field windings to change the speed of motor rotation, and also to stop its rotation. It is constituted by a first moving body, or rotor 101, and second moving body or stator 102 which constitutes an auxiliary driving unit in the form of a stepper motor which is driven by means of the stator 102 and the rotor 101. The auxiliary motor is equipped with a coupling of the rotor 101 and the stator 102 whereby the electrically adjustable brush assembly 103 may be angularly displaced. The combination of the rotor 101 and the stator 102 permits the following:
1. The electrically adjustable brush assembly may be moved in forward or reverse angular directions, and is controlled by the magnetic action generated by electric current.
2. When the electric current remains unchanged, the rotor 101 and the stator 102 are locked, and the electrically adjustable brush assembly 103 retrieves to the balanced point by armature for stepper motor driving.

In the above mentioned rotor 101 and stator 102, one is a permanently polarised magnetic pole and the other includes driving windings. The rotor 101 and stator 102 are driven relative to each other through a conductive ring on one of these bodies with driving windings for driving the aforesaid windings and motor armature by input of driving current.

Figure 1 shows an adjustable brush electric motor arrangement including an auxiliary motor with an electrically adjustable brush assembly 103 which is able to control the alternating or direct current power operating a first rotary electric motor by means of its serial or shunt connection of the armature and magnetic field windings. The central control unit is manually controlled or automatically controlled via software instructions, and drives the auxiliary motor. This results in the brush assembly 103 being adjusted angularly to adjust the operation of the first rotary electric motor. The auxiliary motor rotates the brush assembly 103 in forward or reverse directions to adjust the speed of the first rotary electric motor. The auxiliary motor comprises a rotor 101, a stator 102 having driving windings. The electrically adjustable brush assembly 103 is carried by the rotor 101. The auxiliary motor is preferably a stepper motor which is operated by the central control unit. The stepper motor may rotate in either direction.

The first rotary electric motor includes a primary stator including a primary field winding 114, and a primary armature including a primary armature winding 112. The armature and primary armature winding 112 are carried by a drive shaft 120. The armature carries a commutator 116 through which current is transferred to the primary armature winding 112. Current is transferred to the commutator 116 via the carbon brushes 118 which are carried by the electrically adjustable brush assembly 103. Adjustment of the electrically adjustable brush assembly 103 about the commutator 116 adjusts the operation of the first rotary electric motor. The electrically adjustable brush assembly 103 is freely rotatable on the drive shaft 120.

Figure 2 shows another embodiment of the invention in which the auxiliary motor is again a stepper motor, and the armature and magnetic field windings are connected in series or in parallel depending on the current driving the motor. In addition to the embodiment shown in Figure 1, the auxiliary motor includes a rotor 201 and a stator 202 of the stepper motor. The stepper motor couples the rotor 201 and coaxial armature of the stator 202 to the electrically adjustable brush assembly 203. Again, the rotor 201 and the stator 202 have the following features:
1. The rotor 201 may be moved forward and reverse by controlling the action of the magnetic fields and the input of electricity.
2. If the electric energy remains unchanged, the rotor 201 and the stator 202 are under synchronised lock for driving the electrically adjustable brush assembly 203 to the balanced point by armature.

One of the rotor 201 and the stator 202 is a permanent polarised magnetic and the other includes field windings, and the input electric energy is passed through conductive rings 204,205 to reach the field windings on one of the moving bodies. The control of the angular speed between the rotor 201 and the stator 202 of the stepper motor produce unbalanced angular difference of magnetic pole to drive the rotor 201 to a newly balanced condition. In driving, the lock state between the rotor and stator exists, and so the stator 202 and electrically adjustable brush assembly 103 are attracted to the newly balanced condition to function as locked and wait state. Here, the rotor 201 is fixed to the drive shaft 220, and the stator 202 is rotatable about the drive shaft 220 and the rotor 201 The electrically adjustable brush assembly is carried by the stator 202.

The first rotary electric motor includes a primary field winding 214 which is carried by the housing. The primary armature winding 212 is carried on the drive shaft 220, and is electrically connected via a commutator 216 and carbon brushes 218. The rotor 201 rotates with the drive shaft 220, and the stator 201 which carries the electrically adjustable brush assembly 203 controls the angular position of the carbon brushes 218 on the commutator 216. Thus, the auxiliary motor controls the operation of the first rotary electric motor.

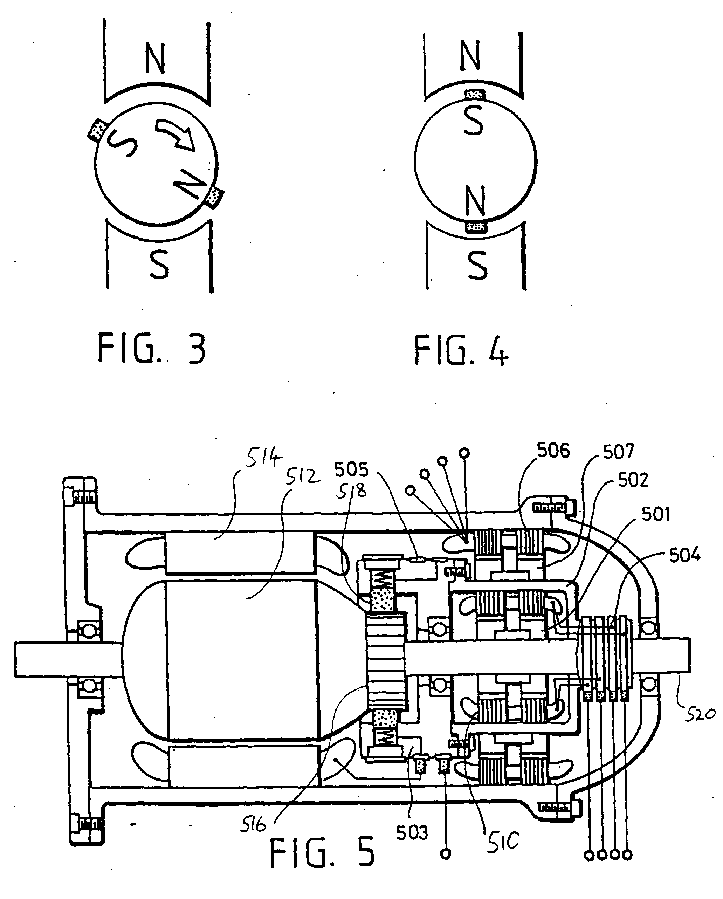

Figures 3 and 4 show drawings of sequential positions of the motion of the motor, with the conductive ring and armature and further conductive ring for transmitting driving electric power.

Figure 5 shows another embodiment of the invention where the auxiliary motor is of the floating type hunting stepper motor. The stepper motor is a dual layer type auxiliary motor for driving the carbon brush 518. The rotor 501 is coupled with a coaxial armature of a stator 502 which is connected to the electrically adjustable brush assembly 503 in which the coupling of iron cores and windings control the angular position. An outer stator 506 and an outer rotor 507 are coupled together. The outer stator 506 comprises iron cores and windings within the motor housing. The stator 502 and outer rotor 507 includes conductive rings 504 and 505 for transmitting electricity from the armature. This structure can be utilised for control by a manual or automatic central control unit for controlling the motor operation. As disclosed in the above embodiments, the coupling of the electrically adjustable brush assembly can be connected to the auxiliary motor for forward or reverse angular displacement. AC or DC current may be used depending on whether the motor is connected in series or as a shunt motor, or a generator to eliminate the park produced by armature reaction and to improve the efficiency and expand the functions. The dual layer type auxiliary motor can operate in forward or reverse directions.

In this embodiment, the rotor 501 is attached to the drive shaft 520 to rotate therewith. The stator 502 is freely rotatable about the rotor 501, and carries the electrically adjustable brush assembly 503. The outer rotor 507 is connected to the stator 502, and rotates relative to the outer stator 506.

To sum up, the design of the present invention offers a driven electrically adjustable brush assembly coupling in the aforesaid auxiliary motor under different conditions for upgrading electric controllability and mobility of the adjustable brush assembly. The design improves efficiency for servo-driving of either larger or smaller horse powered dynamotors with high practical usefulness.

## Claims

1. An adjustable-brush electric motor arrangement comprising:
a first rotary electric motor including a drive-shaft (120) wound with a primary armature winding (112), a commutator (116) mounted on said drive-shaft and electrically connected to said primary armature winding, a stator wound with a primary field winding (114) and an electrically-adjustable brush assembly (103,118) arranged to maintain conductive contact with said commutator during rotation thereof, said electrically-adjustable brush assembly being freely rotatable on said drive shaft by a second rotary electric motor (101,102,103) supported on said drive-shaft.

2. An electric motor arrangement according to claim 1 wherein said second electric motor (101,102,103) is a stepper motor.

3. An electric motor arrangement according to claim 1 or claim 2 wherein said second electric motor (101,102,103) is controlled by a central control unit.

4. An electric motor arrangement according to any preceding claim wherein said second electric motor (101,102,103) comprises a rotor (101) which rotates freely on said shaft (120) relative to said commutator (116) and is driven by a fixed stator (102).

5. An electric motor arrangement according to any of claims 1 to 3 wherein said second electric motor (201,202,203) comprises a rotor and stator (202,201) which are mounted on a body (203) carrying said brushes (218) and said shaft (220) respectively.

6. An electric motor arrangement according to any of claims 1 to 3 wherein said second electric rotor comprises a fixed first stator (506) facing a first rotor (507) which is mounted on a body (502) carrying said brushes (518) and further comprises a further stator (501) mounted on said shaft (520) and facing a further rotor (510) which is mounted on said body (502).

7. An electric motor arrangement according to any preceding claim wherein said brush assembly (103,118) is angularly adjustable to reverse the direction of rotation of the first electric motor.

8. An electric motor arrangement according to any preceding claim wherein said brush assembly (103,118) can be locked into synchronism with the armature of the first electric motor.

## Patentansprüche

1. Elektromotoranordnung mit einstellbaren Bürsten mit:
einem ersten Dreh-Elektromotor, der eine Antriebswelle (120), die mit einer Primärläuferwicklung (112) gewickelt ist, einen Kommutator (116), der auf der Antriebswelle angeordnet und mit der Primärlauferwicklung elektrisch verbunden ist, einen Stator, der mit einer Primärfeldwicklung (114) gewickelt ist sowie eine elektrisch einstellbare Bürstenanordnung (103, 118) aufweist, die zur Beibehaltung des leitenden Kontaktes mit dem Kommutator während seines Drehens angeordnet ist, wobei die elektrisch einstellbare Bürstenanordnung auf der Antriebswelle durch einen zweiten auf der Antriebswelle gelagerten Dreh-Elektromotor (101, 102, 103) frei drehbar ist.

2. Elektromotoranordnung nach Anspruch 1,
**dadurch gekennzeichnet**,
daß der zweite Elektromotor (101, 102, 103) ein Schrittmotor ist.

3. Elektromotoranordnung nach Anspruch 1 oder 2,
**dadurch gekennzeichnet**,
daß der zweite Elektromotor (101, 102, 103) durch eine zentrale Steuereinheit steuerbar ist.

4. Elektromotoranordnung nach einem der vorhergehenden Ansprüche,
**dadurch gekennzeichnet**,
daß der zweite Elektromotor (101, 102, 103) einen Rotor (101) aufweist, der relativ zum Kommutator (116) frei aur der Welle (120) drehbar ist und von einem festen Stator (102) angetrieben wird.

5. Elektromotoranordnung nach einem der Ansprüche 1 bis 3,
**dadurch gekennzeichnet**,
daß der zweite Elektromotor (201, 202, 203) einen Rotor und einen Stator (202, 201) aufweist, die auf einem Körper (203) angeordnet sind, der die Bürsten (218) und die Welle (220) jeweils trägt.

6. Elektromotoranordnung nach einem der Ansprüche 1 bis 3,
**dadurch gekennzeichnet**,
daß der zweite Elektromotor einen festen ersten Stator (506) aufweist, welcher einem ersten Rotor (507) gegenüberliegt, der an einen Körper (502) montiert ist, welcher die Bürsten (518) trägt, und ferner einen weiteren Stator (501) aufweist, welcher auf der Welle (520) montiert ist und einem weiteren Rotor (510) gegenüberliegt, der an den Körper (502) montiert ist.

7. Elektromotoranordnung nach einem der vorhergehenden Ansprüche,
**dadurch gekennzeichnet**,
daß der die Bürstenanordnung (103, 118) zur Umkehrung der Drehrichtung des ersten Elektromotors winkelmäßig einstellbar ist.

8. Elektromotoranordnung nach einem der vorhergehenden Ansprüche,
**dadurch gekennzeichnet**,
daß die Bürstenanordnung (103, 118) in Synchronisation mit dem Läufer des ersten Elektromotors festellbar bzw. verriegelbar ist.

## Revendications

1. Agencement de moteur électrique à balais réglables comprenant:
un premier moteur électrique rotatif comportant un arbre d'entraînement (120) sur lequel est bobiné un enroulement d'induit primaire (112), un commutateur (116) monté sur ledit arbre d'entraînement, et connecté électriquement audit enroulement d'induit primaire, un stator sur lequel est bobiné un enroulement inducteur primaire (114) et un montage de balais réglables de manière électrique (103, 118) agencé de façon à maintenir un contact conducteur avec ledit commutateur pendant la rotation de celui-ci, ledit montage de balais réglables de manière électrique pouvant tourner librement sur ledit arbre d'entraînement à l'aide d'un deuxième moteur électrique rotatif (101, 102, 103) soutenu par ledit arbre d'entraînement.

2. Agencement de moteur électrique selon la revendication 1, dans lequel ledit deuxième moteur électrique (101, 102, 103) est un moteur pas à pas.

3. Agencement de moteur électrique selon la revendication 1 ou la revendication 2, dans lequel ledit deuxième moteur électrique (101, 102, 103) est commandé par une unité centrale de commande.

4. Agencement de moteur électrique selon l'une quelconque des revendications précédentes, dans lequel ledit deuxième moteur électrique (101, 102, 103) comprend un rotor (101) qui tourne librement sur ledit arbre (120) par rapport audit commutateur (116), et qui est entraîné par un stator fixe (102).

5. Agencement de moteur électrique selon l'une quelconque des revendications 1 à 3, dans lequel ledit deuxième moteur électrique (201, 202, 203) comprend un rotor et un stator (202, 201), qui sont montés sur un corps (203) portant respectivement lesdits balais (218) et ledit arbre (220).

6. Agencement de moteur électrique selon l'une quelconque des revendications 1 à 3, dans lequel ledit deuxième moteur électrique comprend un premier stator fixe (506) faisant face à un premier rotor (507), qui est monté sur un corps (502) portant lesdits balais (518), et comprend en outre un autre stator (501) monté sur ledit arbre (520), et faisant face à un autre rotor (510), qui est monté sur ledit corps (502).

7. Agencement de moteur électrique selon l'une quelconque des revendications précédentes, dans lequel ledit montage de balais (103, 118) est réglable de manière angulaire pour inverser le sens de rotation du premier moteur électrique.

8. Agencement de moteur électrique selon l'une quelconque des revendications précédentes, dans lequel ledit montage de balais (103, 118) peut être bloqué en synchronisme avec l'induit du premier moteur électrique.
